# EUROPEAN PATENT APPLICATION

(11) **EP 2 306 392 A1**
(43) Date of publication of application: **06.04.2011**
(21) Application number: 09170470.0
(22) Date of filing: 16.09.2009
(51) Int. Cl.: G06Q 30/00, H04M 3/487, H04L 29/08

(54) **Method for communicating information from one information communicating server, corresponding information communicating server and system**

(71) Applicant: GEMALTO Pte Ltd, Singapore 139941 (SG)
(72) Inventor: Sjarif, Krishna, Beijing 100102 (CN); Winston, Yeo, Singapore 139941 (SG)
(74) Representative: Scheer, Luc

(57) **Abstract**

The invention relates to a method for communicating information from one information communicating server (18). The first information communicating server has a predetermined first communication network address (URL₀). A communicating device (14) stores the first communication network address.
According to the invention, a first terminal (12) comprising or being connected to at least one first information transmitting medium, the first terminal receives successively from the first information transmitting medium at least one predetermined first information item (page 1, page 2,...page N). A second terminal (16) receives from the communicating device the first communication network address. The second terminal sends to the first information communicating server a request for communicating at least one predetermined second information item (URL₁). The first information communicating server retrieves at least one predetermined second information item associated with the currently transmitted first information item (page 1) and the first information communicating server sends to the second terminal the at least one second information item (URL₁).
The invention also relates to corresponding information communicating server (18) and system (10).

## Description

### Field of the invention:

The invention relates, in a general manner, to a method for communicating information from one information communicating server.

Moreover, the invention relates to a server for communicating information. The information communicating server has a predetermined first communication network address. In particular, the communication network may be Internet. The information communicating server has a Uniform Resource Locator (or URL), as first communication network address.

Finally, the invention relates to a system for communicating information.

The present invention applies notably when a communicating device, such as a Radio Frequency IDentification (or RFID) tag, is embedded or attached to a poster for advertising an article, a service or a movie, as an information transmitting medium.

### State of the art:

A Japanese Patent Laid-Open Publication n°269508/2002 describes a solution in which a RFID tag, that stores a URL for addressing a server, is embedded within a poster for advertising an article or a movie. Such a solution has the advantage of providing a user of a mobile terminal that receives from the RFID tag a radiofrequency signal with the URL to access an Internet home page of a corresponding server. The terminal user obtains thus information about the associated advertisement.

However, due to the fact that the RFID tag stores a static and fixed URL, such a known solution does not allow to change the URL for several different posters that are to be advertised.

There is a need to inform a person interested by a particular advertisement, among a plurality of advertisements that are successively advertised, with further information related to the concerned advertisement.

### Summary of the invention:

The invention proposes a solution for satisfying the just hereinabove specified need by providing a method for communicating information from one information communicating server, said first information communicating server. The first information communicating server has a predetermined first communication network address. A communicating device stores the first communication network address.

According to the invention, the method comprises the steps that follow. A first terminal comprising or being connected to at least one first information transmitting medium, the first terminal sends successively to the first information transmitting medium at least one predetermined first information item. The first information transmitting medium transmits the at least one first information item. A second terminal receives from the communicating device the first communication network address. The second terminal sends to the first information communicating server a request for communicating at least one predetermined second information item. The first information communicating server retrieves at least one predetermined second information item associated with the currently transmitted first information item. The first information communicating server sends to the second terminal the at least one second information item.

The principle of the invention consists in that, firstly, a first terminal transmits one or several information items to be successively experienced by a user of a second terminal through an information transmitting medium that is controlled by the first terminal. Then, at one time, the second terminal reads from the communicating device a (first) server address for example when the user of the second terminal is interested by the information item that is being transmitted. Finally, the interrogated (first) server (or termed information communicating server) fetches data or information item linked to the currently transmitted information item and communicates this information item to the second terminal.

One single information transmitting medium transmits, in a successive manner, one or several information items.

It is to be noted that the information communicating server knows the (first) information item that is currently transmitted or presented to the second terminal user. This is the information communicating server that manages information item to be sent to the second terminal, as the second information completing the first information.

It is to be noted that the concerned second terminal user may be a consumer of the transmitted first information through the first information transmitting medium and the transmitted second information through a man machine interface or a second information transmitting medium included or connected to the second terminal. Each consumer may benefit from the given total information, through at least one of the user senses, such as the eyesight, the hearing, the touch, the smell and/or the taste.

The invention solution makes it possible, thanks to a fixed communication network address, as static information, to provide a second terminal user with dynamic information since the first information transmitting medium changes the transmitted information from time to time. Moreover, the first information item given by the information transmitting medium is completed by the second information item that may be sensed by the second terminal user.

To provide dynamic information, neither the communication network address that is accessed from the second terminal nor the communicating device that stores the communication network address is modified.

Advantageously, the second information item includes a second communication network address relating to a second information communicating server, a telephone number, an email address, and/or a post mail address to be used by the second terminal to send and/or receive further information.

According to a further aspect, the invention is an information communicating server. The information communicating server has a predetermined first communication network address.

According to the invention, at least one first information item being successively transmitted through a first information transmitting medium, the information communicating server is adapted to receive a request for communicating at least one predetermined second information item, retrieve at least one predetermined second information item associated with the currently transmitted first information item; and send the at least one second information item.

According to a further aspect, the invention is a system for communicating information.

According to the invention, the system comprises a communicating device, the communicating device storing a first communication network address relating to a first information communicating server, a first terminal, the first terminal comprising or being connected to at least one first information transmitting medium, the first terminal comprising means for sending successively to the first information transmitting medium at least one predetermined first information item; the first information transmitting medium comprising means for transmitting the at least one first information item; a second terminal, the second terminal comprising means for receiving from the communicating device the first communication network address, the second terminal comprising means for sending to the first information communicating server a request for communicating at least one predetermined second information item; the first information communicating server comprising means for retrieving at least one predetermined second information item associated with the currently transmitted first information item and the first information communicating server comprising means for sending to the second terminal the at least one second information item.

As communicating device, it can be a contact-less communicating device, like an RFID tag, an infra-red transmitter, a Bluetooth 2D (acronym for two dimensions) barcodes and/or a printed bar code.

As first information transmitting medium, it can be a display and/or a loudspeaker.

As first terminal, it can be a Personal Computer (or PC), a desktop, a laptop, and/or a set-top box. The first terminal may also be constituted by a computer with an integrated Liquid Crystal Display (or LCD) Television (or TV), as first terminal including the first information transmitting medium.

As second terminal, it can be a mobile telephone, a Personal Digital Assistant (or PDA), a netbook, a mobile computer.

### Brief description of the drawings:

Additional features and advantages of the invention will be more clearly understandable after reading a detailed description of one preferred embodiment of the invention, given as an indicative and non-limitative example, in conjunction with the following drawings:

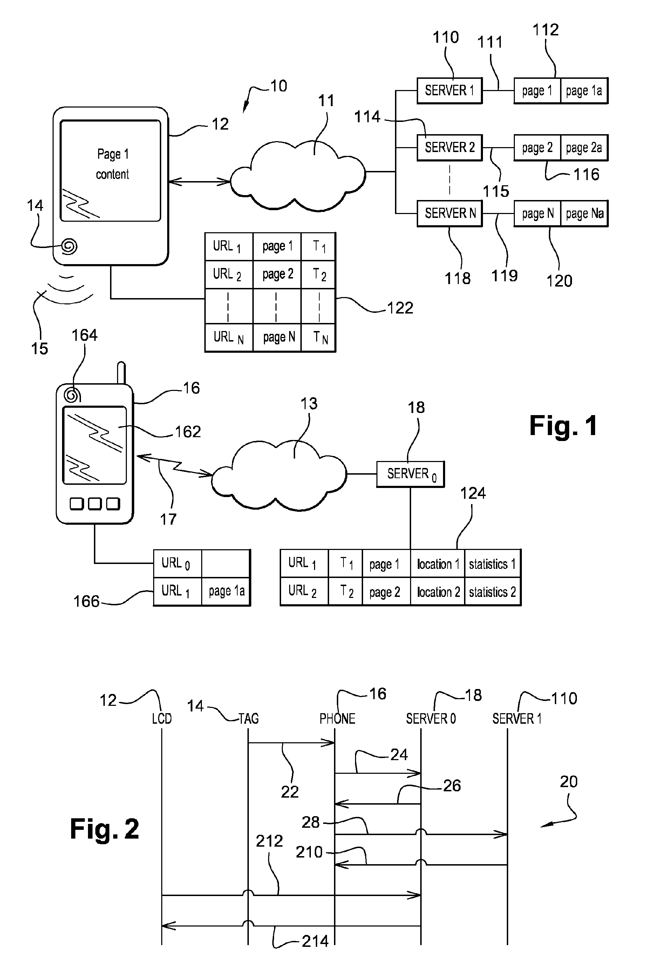

- Figure 1 illustrates a simplified diagram of one embodiment of a system for communicating information comprising a LCD computer, as first terminal with an information transmitting medium, a RFID tag, as communicating device, a mobile NFC telephone, as second terminal, and an information communicating server, the system being adapted to provide information to the mobile NFC telephone that is synchronized with the information displayed by the LCD, according to the invention; and
- Figure 2 represents an example of a flow of messages exchanged notably between the RFID tag, the mobile NFC telephone, and the information communicating server of the system of figure 1.

### Detailed description:

A description of the invention that follows is made with a reference to the name of the entities or the messages defined by a mobile radio-communication network standard, such as a GSM (acronym for "Global System for Mobile communications"), UMTS (acronym for "Universal Mobile Telecommunication System") and/or CDMA (acronym for Code Division Multiple Access) network(s).

Nevertheless, the present invention can be applied to any network having technical background similar to the radio-communication network having technical background similar to the GSM, UMTS and/or CDMA network(s).

Herein under is considered a case in which the invention method for communicating information from one information communicating server is implemented by a LCD computer, as first terminal integrating the first information transmitting medium, a RFID tag, as communicating device, a mobile Near Field Communication (or NFC) telephone, as second terminal, and an information communicating server.

Naturally, the invention method for communicating information from one information communicating server may be implemented by intermediary entities, as communicating device, as first and/or second terminal(s), and/or as first information transmitting medium, that is(are) distinct from the ones of the embodiment that is described herein-below.

For example, according to another embodiment (not represented), the mobile NFC telephone cooperates with a token, so as to provide the mobile NFC telephone user with further information to be coupled with the currently displayed content at the digital display. In such another embodiment, the token stores and executes an application for communicating with the information communicating server. As token, it may be a Universal Integrated Circuit Card (or UICC), as a smart card, that cooperates with the mobile NFC telephone, as second terminal. As known per se, the UICC includes a Subscriber Identity Module (or SIM) application or a corresponding application. The UICC can be a smart card that securely stores an International Mobile Subscriber Identity (or IMSI), as a unique number associated with all GSM and UMTS network mobile phone users. The IMSI is used to identify a subscriber in relation to at least one mobile radio-communication network. The SIM type smart card can be, for example, a SIM smart card for a GSM network, a Universal Subscriber Identity Module (or USIM) for a UMTS network, a Removable User Identity Module (or RUIM), a CDMA Subscriber Identity module (or CSIM) for a CDMA network, and/or an Internet Protocol multimedia Services Identity Module (or ISIM) for IP Multimedia Subsystem (or IMS). Naturally, the just aforementioned list is not exhaustive but only for exemplifying purposes and is not considered to reduce the scope of the present invention.

Moreover, instead of being constituted by a mobile NFC telephone, the second terminal can be, for example, a PC, a laptop computer, and/or a PDA.

Figure 1 shows an embodiment of an electronic system 10 for communicating information.

In the described embodiment, the system 10 for communicating information is adapted to provide information relating to a content that is being displayed by a LCD controlled by a computer 12 that integrates the LCD, as LCD computer 12.

The system 10 for communicating information comprises the LCD computer 12, as first terminal with a first information transmitting medium, a RFID tag 14, a mobile NFC telephone 16, as second terminal, and an information communicating server 18 for controlling information to be transmitted to the LCD through the LCD computer 12 and the mobile NFC telephone 16.

For the sake of clarity and conciseness, the LCD computer 12, the RFID tag 14, the mobile NFC telephone 16 and the information communicating server 18 are termed hereinafter the LCD 12, the tag 14, the phone 16 and the main server 18 respectively, except when the replacing term may be confusing.

According to an alternative (not represented), the main server is adapted to control information to be transmitted only to the phone.

According to another alternative (not represented), the main server is adapted to control information to be transmitted only to the LCD through the LCD computer.

As will be explained, the system 10 for communicating information allows to provide a user of the phone 16 with a first page, namely page 1 like a movie, as a media content or information, while providing her or him on the same time, for example, through a display 162 of the phone 16 with further information, like a schedule of the movie in the vicinity of the location of the LCD 12.

It is to be noted that only one LCD 12 is represented for clarity reasons. However, it is clear that the main server 18 controls a fleet of LCDs (located at different places) that may display the same or different content on the same time.

It is also to be noted that only one phone 16 for clarity reasons. However, it is clear that the main server 18 controls a fleet of phones that may display to their users, through a display of each phone, the same or different content on the same time.

The LCD 12 includes at one microprocessor, at least one memory, and at least one Input/Output (or I/O) interface (not represented).

The LCD I/O interface includes a wire connection with an Internet network 11, one (LCD) display and possibly a loudspeaker.

The LCD memory stores data and at least an Internet browser for connecting the Internet network 11 and a player for displaying content data through the display, as applications. Among the stored data, there is a database 122 with an URL for each server from which a page is to be downloaded through the Internet network 11 and displayed at the display. The URL of each of the servers 110, 114, 118 is preferably provided by the main server 18, as will be infra explained in relation with figure 2. Moreover, the database preferably associates to each page a predetermined period of time during which the concerned page is to be displayed through the LCD display. As page data, it may be any media data, namely picture, audio and/or video data.

The LCD microprocessor processes data originating from the memory. The LCD microprocessor executes the browser to connect the Internet network 11, so as to fetch data originating from one or several servers 110, 114, 118, also noted server 1, 2, and N respectively, connected to the Internet network 11 before storing it into the LCD memory. The LCD microprocessor executes the player to convert the previously stored data into sound and/or image and transmits the converted data to the loudspeaker and/or the LCD display.

The LCD 12 is preferably arranged to display several pages in a successive manner, namely one page at a time, during a predetermined period of time. For example, the displayed page is changed every ten seconds or the like. In the present status, the LCD display is displaying the first page, namely page 1.

The LCD is preferably arranged to request to the main server 18 a URL of a server from which a page is to be downloaded before displaying it through the LCD display.

The tag 14 is attached to the LCD 12.

The tag 14 includes an antenna.

The tag 14 stores data, like a URL of the main server 18 noted URL₀. The tag 14 may also store other data, such as one location information corresponding to a geographical point or area at which the LCD 12 is present, like a taxi/train/subway station, a shopping hall, a building lift, a bus stop, a hotel, an airport hall and so on, and/or a tag identifier. The tag 14 stores permanent data that does not need to be changed while the content data experienced by a phone user at the LCD side changes.

The phone 16 is equipped with an NFC chip, so as to read data stored by the tag 14, when a user of the phone 16 is sufficiently close to the tag 14.

The phone 16 includes at least one microprocessor, at least one memory and at least one I/O interface.

The phone I/O interface comprises an antenna 164 for receiving, through a wireless link 15, a short range radiofrequency signal originating from the tag 14.

The phone I/O interface also includes a radio interface, through a wireless link 17, with a mobile radio-communication network 13, a phone display and a phone loudspeaker. The mobile radio-communication network 13 is interconnected with the Internet network 11.

The phone memory stores data 166, an Internet browser, and at least one application for communicating with the information communicating server. Among the stored data, there is the data read from the tag 14, like the URL of the main server 18 and possibly the location information and/or the tag identifier. Among the stored data 166, there is also the data to be provided, through the mobile radio-communication network 13, by the main server 18 or the other servers, such as URL, and page 1 a (as described hereinafter in relation with Figure 2).

The phone microprocessor processes data originating from the memory. The phone microprocessor executes the application for communicating with the information communicating server to connect the main server 18, so as to fetch data accessible through one or several servers 110, 114, 118 connected to the Internet network 11 before storing it into the phone memory and possibly letting it experienced by the phone user through the display 162 and/or the loudspeaker.

The phone 16 is preferably arranged to connect to the main server 18 thanks to its URL, namely URL₀, provided by the tag 14 and possibly uploading to the main server 18 data, such as the location information and/or the tag identifier originating from the tag 14.

The phone 16 is preferably arranged to send to the main server 18 a request for downloading further information.

The phone 16 is preferably arranged to display, through its own display 162 or an external display to which the phone 16 is connected, further information relating to the page that is currently being viewed by the phone user through the LCD display.

The main server 18 is connected, through a wire or wireless link 19, to the mobile radio-communication network 13.

The main server 18 is hosted by a computer and is dedicated to running an application for communicating information.

The information to be communicated by the main server 18 is stored in a database 124 accessible from the main server 18.

The database 124 includes the URL of each server that provides at least one page to be displayed at the LCD display and/or at the phone display 162. The database 124 includes the predetermined time period value for each page to be displayed at the LCD display and/or at the phone display 162. Moreover, the database 124 may record data based upon the data uploaded from the phone 16, such as the location information where the user experienced the currently displayed page and/or the page that has allowed to generate a request of further information. The database 124 may generate statistics, such as the page that is the most popular among the ones shown through the LCD display.

The database 124 is kept up-to-date with an URL mapping for each media that is transmitted or to be transmitted.

Once the main server 18 has received the request for downloading further information, the main server 18 is adapted to retrieve further information and send back to the requester the retrieved information.

The main server 18 may, once solicited, register the phone user as one subscriber to a mailing list, register a location information uploaded through the phone 16 from the tag 14.

According to a preferred embodiment, the main server 18 downloads up to the phone 16 a URL of another server corresponding to the displayed page for the time being that is able to provide further information related to the displayed page.

Instead of providing the URL of another server to which the phone 16 has to connect and request further information in relation with the displayed page, the main server 18 may be able to re-direct the connection opened by the phone 16 to the concerned other server.

In another embodiment (not represented), the main server 18 downloads up to the phone 16, a telephone number, an email address and/or a post mail address.

In another embodiment (not represented), the main server 18 is arranged to send back a predetermined email or Short Message Service (or SMS) message.

In still another embodiment (not represented), the main server 18 is arranged to transfer a coupon, so as to provide the phone user with a price reduction for an article or a service for which a page is currently being displayed by the LCD display.

In still another embodiment (not represented), the main server 18 is arranged to communicate to the phone 16 a command for setting-up a phone call from the phone 16 to a predetermined voice box or call centre by using a corresponding phone number.

The further information, that is thus received by the phone 16, may provide a link to another entity, like a server, or a person, for example, at a call centre, to obtain relevant information related to the information given to the user through the LCD display.

The thus exchanged data between the main server 18 and the phone 16 may have been previously encrypted, so as to protect access to the content. To encrypt the data, the main server 18 and the phone 16 share, i.e. store and use, an encryption algorithm and an encryption key, as well as a decryption algorithm and a decryption key.

The URL of the other server that is provided by the main server 18 to the phone 16 allows the phone 16 to connect to the other server, request further information from it, that may be then displayed at the phone display 162.

When the main server 18 receives from the LCD 12 a request for being provided with a URL of a server from which a page is to be displayed by the LCD display, the main server 18 sends the URL of the server while possibly accompanying it with a predetermined period of time during which the page has to be displayed.

Thus, each page to be displayed by the LCD display may be replaced, after a predetermined period of time, by a replacing page.

The servers 110, 114, 118 access each an associated memory with data to be displayed as a first page, namely page 1, page 2, ..page N, and possibly an additional page(s), such as page 1 a, page 2a, ..page Na, that furnishes completed information with respect to the information included within the first page.

For example, the page 1 is currently displayed by the LCD display and, when the phone user approaches her or his phone 16 to the tag 14 connects the main server 18 thanks to the read URL₀. Then, the phone 16 sends to the main server 18 a request for further information that responses by sending back a URL, noted URL, relating to the server, namely server 1, that has provided the LCD display with page 1. Then, with the appropriate URL, the phone 16 connects to the concerned server, namely server 1, while requesting further information and receives corresponding additional information, namely page 1a, from the connected server that completes the information.

This system 10 for communicating information is well suited to advertising. The invention system 10 further allows to better estimate a success of an advertising campaign, since it may be managed at the main server side.

Figure 2 depicts an example of a message flow 20 that involves the LCD 12, the tag 14, the phone 16, the main server 18, and the server 110.

Firstly, it is assumed that the LCD 12 lets the LCD display display a movie, as page 1, previously downloaded by the LCD 12 from the server 110.

It is assumed that the server 110 accesses to the database 124, within which a list of different URLs corresponding to the different pages to be displayed at the LCD display has been previously stored.

It is assumed that the server 110 allows to provide a user of the phone 16 with further data relating to the movie that is currently being played by LCD 12, as page 1 a, such as a schedule of the movie at one or several cinema rooms that are close (or the closest) to the location of the LCD 12.

The phone user that is interested by obtaining further information about the movie that is being played through the LCD display fetches the URL of the main server 18 by approaching the phone 16 to the tag 14, so as to power it and read the URL of the main server 18.

The tag 14 transmits to the phone 16 the URL of the main server 18, namely URL₀, with a first message 22.

The receipt by the phone 16 of the first message 22 through a short range wireless connection triggers an execution of an application for communicating with the main server 18 whose URL has just been received.

The phone 16 launches the Internet browser and sends then to the main server 18 a request 24 for communicating further information when the LCD display displays the movie.

The main server 18 knows the current page, namely page 1, that is being displayed through the LCD display and deduces from the database 124 a URL of the server at the root of the current page.

According to another embodiment (not represented) the main server 18 accesses directly to the further information, namely page 1a, and sends it back to the phone 16, as response to the request.

The main server 18 sends to the phone 16 a response 26 with a URL, namely URL₁, of the server from which the currently displayed page originates.

As soon as the phone 16 is aware of the URL of the concerned server, namely server 110, the phone 16 launches the Internet browser and sends to the concerned server a request 28 for getting further information in relation with the information contained in page 1.

The concerned server 110 sends back, as response 210 to the request, to the phone 16 the further requested information, namely page 1a, as information associated with information currently displayed as page 1.

Before the expiration of the current period of time T1 during which the information of page 1 is displayed at the LCD display, the LCD 12 sends to the main server 18 a request 212 for getting information about the information to be next displayed at the LCD display.

Then, the main server 18 sends back, as response 214 to the request, to the LCD 12 a URL, namely URL₂ relating to the server, namely server 114, from which the next page is to be received, namely page 2, preferably accompanied with information relating to the corresponding period of time, namely T2, during which the corresponding page is to be displayed.

According to another embodiment (not represented), the main server 18 accesses directly to the next information (in time) to be displayed at the LCD display, namely page 2, and sends it back to the LCD 12, as response to the request, so as to be displayed at the place of the currently displayed page, namely page 1.

Once received, the LCD 12 executes the Internet browser and connects to the concerned server 114 while requesting it to download the information to be displayed through the LCD display, namely page 2.

Thus, at a given time, the phone user experiences on the one hand, through the LCD display, a piece of information, and, on the other hand, through the phone display 162, a complementary piece of information.

The proposed solution is therefore user friendly and in real time experienced since a response at the phone' side is obtained just after tapping on the tag 14 to get more information. The phone user may tend to less forget information when she or he acquires it rapidly (instead of inquiring about further information after having experienced an original information without quick associated complement).

The proposed solution is appropriate not only for static (displayed) content but also for dynamic content (that is changed with the time at the first terminal' side).

Furthermore, the proposed solution is easy to implement and quick since the main server 18 shares with the user an up-to-date information that is tracked at the main server side.

## Claims

1. A method (20) for communicating information from one information communicating server (18), said first information communicating server, the first information communicating server having a predetermined first communication network address (URL₀), a communicating device (14) storing the first communication network address,
**characterized in that** the method comprises the following steps:
- a first terminal (12) comprising or being connected to at least one first information transmitting medium, the first terminal sends successively to the first information transmitting medium at least one predetermined first information item (page 1, page 2,...page N);
- the first information transmitting medium transmits the at least one first information item;
- a second terminal (16) receives from the communicating device the first communication network address (22);
- the second terminal sends to the first information communicating server a request (24) for communicating at least one predetermined second information item (URL₁);
- the first information communicating server retrieves at least one predetermined second information item associated with the currently transmitted first information item (page 1); and
- the first information communicating server sends (26) to the second terminal the at least one second information item.

2. Method according to claim 1, wherein the at least one second information item includes at least one element of a group comprising:
- a second communication network address (URL₁) relating to a second information communicating server (110);
- a telephone number;
- an email address;
- a post mail address.

3. Method according to claim 1 or 2, wherein, the communicating device being a contact-less communicating device (14), the communicating device being attached to the first information transmitting medium, the communicating device storing a location information relating to the first information transmitting medium, the second terminal receives from the communicating device the location information relating to the first information transmitting medium.

4. Method according to claim 2 or 3 depending on claim 2, wherein, the second information item being the second communication network address relating to a second information communicating server, the second terminal sends to the second information communicating server a request for communicating at least one predetermined third information item (page 1a).

5. Method according to any previous claim, wherein the first information communicating server generates at least one action to be performed by the first information communicating server and/or the second terminal and sends to the second terminal the third information item, the at least one action comprising at least one element of a group comprising:
- to register a user of the second terminal as one subscriber to a mailing list;
- to register a location information relating to the first information transmitting medium;
- to launch a link to a server a third communication address of which is predetermined;
- to send to the second terminal an email message;
- to send to the second terminal a Short Message Service message;
- to communicate to the second terminal a coupon;
- to set-up a phone call.

6. Method according to any previous claim, wherein the first information communicating server sends to the first terminal a fourth information item to be transmitted by the first information transmitting medium instead of the first information item, the fourth information item (page 2) replacing the first information item, the first information communicating server recording a communication network address (URL₂) relating to a server providing information about the fourth information item.

7. Method according to claim 6, wherein the first information transmitting medium transmits the fourth information item during a predetermined period of time (T2).

8. Method according to claim 7, wherein the first information communicating server sends to the first terminal the predetermined period time during which the fourth information item is to be transmitted.

9. An information communicating server (18), the information communicating server having a predetermined first communication network address (URL₀),
**characterized in that**, at least one first information item (page 1, page 2,... page N) being successively transmitted through a first information transmitting medium, the information communicating server is adapted to:
- receive a request (24) for communicating at least one predetermined second information item;
- retrieve at least one predetermined second information item associated with the currently transmitted first information item; and
- send the at least one second information item (26).

10. A system (10) for communicating information,
**characterized in that** the system comprises :
- a communicating device (14), the communicating device storing a first communication network address (URL₀) relating to a first information communicating server (18),
- a first terminal (12), the first terminal comprising or being connected to at least one first information transmitting medium, the first terminal comprising means for sending successively to the first information transmitting medium at least one predetermined first information item (page 1, page 2,...page N);
- the first information transmitting medium comprising means for transmitting the at least one first information item;
- a second terminal (16), the second terminal comprising means for receiving from the communicating device the first communication network address, the second terminal comprising means for sending to the first information communicating server a request (24) for communicating at least one predetermined second information item;
- the first information communicating server comprising means for retrieving at least one predetermined second information item associated with the currently transmitted first information item and
- the first information communicating server comprising means for sending to the second terminal the at least one second information item (26).
